Europäisches Patentamt

European Patent Office

Office européen des brevets

(11) Publication number : **0 516 357 A1**

## (12) EUROPEAN PATENT APPLICATION

(21) Application number : 92304675.9

(22) Date of filing : 22.05.92

(51) Int. Cl.$^5$ : **C02F 5/10**, C02F 5/14, C02F 5/12

(30) Priority : 31.05.91 US 708526

(43) Date of publication of application :
02.12.92 Bulletin 92/49

(84) Designated Contracting States :
AT BE CH DE DK ES FR GB GR IT LI LU NL PT SE

(71) Applicant : **CALGON CORPORATION**
Route 60-Campbell's Run Road
Robinson Township Pennsylvania 15205 (US)

(72) Inventor : **Bendiksen, Beverly**
**1410 State Avenue**
**Coraopolis, PA 15108 (US)**
Inventor : **Yorke, Monica**
**1452 State Avenue**
**Coraopolis, PA 15108 (US)**

(74) Representative : **Thompson, John Dr. et al**
**Merck & Co., Inc. European Patent**
**Department Terlings Park Eastwick Road**
**Harlow, Essex CM20 2QR (GB)**

(54) Anionic/cationic polymer mixture for scale inhibition.

(57)    An anionic/cationic polymer mixture comprising (a) polyacrylic acid having a weight average molecular weight of from about 1-5 thousand, and (b) poly(dimethyldiallylammonium chloride) having a weight average molecular weight of from about 25 thousand to 1 million, wherein the weight ratio of (a) to (b) is from 1 :1 to 1 :8, has been found to give excellent inhibition of the formation and adherency of calcium carbonate scale, especially at elevated pH's of 8.5 - 9.5 and high saturation levels of calcium carbonate.

EP 0 516 357 A1

## BACKGROUND OF THE INVENTION

### 1. Field of the Invention

The present invention relates to compositions and methods for inhibiting the formation, deposition and adherency of alkaline earth metal scale deposits, especially calcium carbonate ($CaCO_3$) scale deposits, on metallic surfaces of aqueous systems, particularly where those compositions are mixtures of anionic and cationic polymers comprising polyacrylic acid and poly(dimethyldiallylammonium chloride), respectively.

Generally, calcium carbonate scale deposits are incrustation coatings which accumulate on the metallic surfaces of a water-carrying system through a number of different causes.

Various industrial and commercial water-carrying systems are subject to calcium carbonate scale formation problems. Calcium carbonate scale is of particular concern in heat exchange systems employing water, such as, for example, boiler systems, and once-through and open recirculating water cooling systems.

The water employed in these systems ordinarily will contain a number of dissolved salts, and the alkaline earth metal cation calcium is usually prevalent, as is the anion carbonate. The combination product of calcium cation and carbonate anion will precipitate from the water in which they are carried to form scale deposits when the concentration of the anion and cation comprising the reaction product, i. e., calcium carbonate, exceeds the solubility of the reaction product itself. Thus, when the concentrations of calcium ion and carbonate ion exceed the solubility of the calcium carbonate reaction product, a solid phase of calcium carbonate will form as a precipitate. Precipitation of the reaction product will continue until the solubility product concentrations of the constituent ions are no longer exceeded.

Numerous factors may be responsible for producing a condition of supersaturation for the reaction product calcium carbonate. Among such factors are changes in the pH of the water system, evaporation of the water phase, rate of heat transfer, amount of dissolved solids, and changes in the temperature or pressure of the system.

For boiler systems and similar heat exchange systems including cooling towers, the mechanism of scale formation is apparently one of crystallization of scale-forming salts from a solution which is locally supersaturated in the region adjacent the heating surface of the system. The thin viscous film of water in this region tends to become more concentrated than the remainder of the solution outside this region. As a result, the solubility of the scale-forming calcium carbonate salt reaction product is first exceeded in this thin film, and crystallization of calcium carbonate scale results directly on the heating or heat exchange surface.

In addition to this, a common source of scale in boiler systems is the breakdown of calcium bicarbonate to form calcium carbonate, water and carbon dioxide under the influence of heat. For open recirculating cooling water systems, in which a cooling tower, spray pond, evaporative condenser, and the like serve to dissipate heat by evaporation of water, the chief factor which promotes calcium carbonate scale formation is concentration of solids dissolved in the water by repeated evaporation of portions of the water phase. Thus, even a water which is not scale forming on a once-through basis usually will become scale forming when concentrated two, four, or six times. Moreover, alkalinity of the makeup water, with evaporative cycles over time results in an increasing alkalinity of the water in the overall system, often reaching pH's of 8.5 - 9.5 and even higher. Conventional scale inhibiting compositions typically fail in systems having such severe conditions.

The formation of calcium carbonate scale deposits poses a serious problem in a number of regards. The calcium carbonate scale which is formed possesses a low degree of heat conductivity. Thus, a calcium carbonate scale deposit is essentially an insulating layer imposed across the path of heat travel from whatever source to the water of the system. In the case of a boiler system, the retarded heat transfer causes a loss in boiler efficiency. Increased input of heat to compensate for this loss results in overheating of the boiler metal and consequent tube failures. In addition to this problem, calcium carbonate scale formation facilitates corrosive processes, and a substantial calcium carbonate scale deposit will interfere materially with fluid flow. Consequently, calcium carbonate scale is an expensive problem in many industrial water systems, causing delays and shutdowns for cleaning and removal.

Although the present invention is directed primarily to preventing or inhibiting the deposition of calcium carbonate scale, the most prevalent type of scale deposit, it is also applicable to inhibiting the deposition of other types of alkaline earth metal scales. For example, most industrial and commercial water contains alkaline earth metal cations, such as calcium, magnesium, etc., and several anions such as bicarbonate, carbonate, sulfate, oxalate, phosphate, silicate, fluoride, etc. When combinations of these anions and cations are present in concentrations which exceed the solubility of their reaction products, precipitates form until their product solubility concentrations are no longer exceeded. These precipitates are alkaline earth metal scales. Thus, by alkaline earth metal scales is meant scales including but not limited to calcium carbonate, magnesium carbonate, calcium phosphate, and calcium sulfate. These scales form frequently in the tubes of heat exchangers and on other heat exchange surfaces.

The anionic/cationic polymer mixtures comprising polyacrylic acid and poly(dimethyldiallylammonium chloride) of the present invention are used in the same range of amounts as threshold inhibitors in the scale inhibition method of the present invention, rather than as sequestering or chelating agents, although the compositions of the present invention have dispersant properties as well and significantly reduce the adherency of any scale deposit which is formed, facilitating its easy removal.

Scale-forming compounds can be prevented from precipitating by inactivating their cations with chelating or sequestering agents, so that the solubility of their reaction products is not exceeded. Generally, this requires many times as much chelating or sequestering agent as cation, since chelation is a stoichiometric reaction, and these amounts are not always desirable or economical. However, several decades ago, it was discovered that certain inorganic polyphosphates would prevent such precipitation when added in amounts far less than the concentrations needed for sequestering or chelating.

When a precipitation inhibitor is present in a potentially scale-forming system at a markedly lower concentration than that required for sequestering the scale-forming cation (stoichiometric), it is said to be present in "threshold" amounts. See, for example, Hatch and Rice, Indust. Eng. Chem., 31, 51-53 (1939); Reitemeier and Buehrer, J. Phys. Chem., 44 (5), 535-536 (1940); Fink and Richardson U.S. Pat. No. 2,358,222; and Hatch, U.S. Pat. No. 2,539,305.

Generally, sequestering takes place at a weight ratio of sequestration compounds to scale-forming cation components of greater than about 10:1, depending on the anion components in the water. Threshold inhibition generally takes place at a weight ratio of threshold active compounds to scale-forming cation components of less than about 0.5:1.0.

Similarly, anionic and cationic polymers can be used as dispersants in accordance with methods known in the art, but the dosage levels necessary to achieve dispersion are in the range of 0.5 - 10% by weight of the system being treated, which is many orders of magnitude higher that the dosage levels used for the compositions of the present invention. Thus, it is a unique aspect of the present invention that it is possible to achieve essentially non-adherent scale using only threshold inhibitor dosage levels of the compositions of the present invention.

Recently, attention has been focused on controlling scaling under severe conditions, where conventional treatments such as those described above do not provide complete scale control. Current technology in scale control can be used to inhibit $CaCO_3$ scale up to 100 to 120 times calcite saturation, i.e., a water containing $Ca^{2+}$ and $CO_3^{2-}$ present at 100 times (100 X) their solubility limit. However, what is desired are inhibitors effective in 300 X water, i.e., where the calcite ions can be prevented from precipitating as calcium carbonate scale using substoichiometric amounts of an inhibitor.

Severity of the scaling tendency of a water sample is measured using the saturation index, which may be derived in accordance with the following equation:

$$SI = \frac{(Ca^{2+})(CO_3^{2-})}{K_{spCaCo_3}}$$

where SI is the saturation index for calcium carbonate, $(Ca^{2+})$ is the concentration of free calcium ions, $(CO_3^{2-})$ is the concentration of free carbonate ions, and $K_{spCaCO_3}$ is the solubility product constant for $CaCO_3$. All of the quantities on the right side of the above equation are adjusted for pH, temperature and ionic strength.

One problem which may be encountered with scale inhibiting compositions is their calcium tolerance. Calcium tolerance is a measure of a chemical compound's ability to remain soluble in the presence of calcium ions $(Ca^{2+})$. One of the parameters of scale control under severe conditions is pH. As pH increases, calcium tolerance decreases rapidly for traditional $CaCO_3$ threshold inhibitors, e.g., HEDP and AMP. These inhibitors precipitate with calcium at alkaline pH's, rendering them useless as threshold scale inhibitors. While it is common practice to use an acid feed to the water of, e.g., a cooling tower system in order to lower pH and thus avoid the calcium tolerance problem for conventional inhibitors, the danger to handlers which such acid feeding poses makes it all the more important to find scale inhibitors which operate at high pH's.

2. Brief Description of the Prior Art

Early efforts to reduce scale formation in water-carrying systems employed compounds such as tannins, modified lignins, algins, and other similar materials. Chelating or sequestering agents have also been employed to prevent precipitation or crystallization of scale-forming calcium carbonate. Another type of agent which has been actively explored heretofore as a calcium carbonate scale inhibiting material is the threshold active inhibitor. Such materials are effective as scale inhibitors in amounts considerably less than that stoichiometrically required, and this amount is termed the threshold amount. Inorganic polyphosphates have long been used as such threshold active inhibitors. For examples of such materials, see Fink - US 2,358,222; Hatch - US 2,539,305; and Ralston US 3,434,969. Certain water soluble polymers, including groups derived from acrylamide and acrylic acid have been used to condition water containing scale-forming calcium carbonate. For example, see US 2,783,200; 3,514,476; 2,980,610; 3,285,886; 3,463,730; 3,518,204; 3,928,196; 3,965,027; and 4,936,987. In particular, there has been employed anionic polyelectrolytes such as polyacrylates, polymaleic anhydrides, copolymers of acrylates and sulfonates, and polymers of sulfonated styrenes. See, for example, US 4,640,793; 4,650,591; and 4,671,888. However, when used as threshold alkaline earth metal scale inhibitors, large dosages of these polymers are required, which in turn increases operating costs.

US 4,457,847 discloses antiscalant use of a water-soluble sequestrant anionic vinyl polymer containing at least 30% by weight of carboxylate functionality, and having a molecular weight within the range of 500-50,000.

While various polycarboxylates, including polyacrylic acid, have been used as scale inhibiting agents, as described above, no similar use has been made of polycationic agents, apparently because of the difference in electronic charge and the conventional theories of the mechanisms of action for polymeric threshold inhibitors and dispersants.

## SUMMARY OF THE INVENTION

The present invention relates to a composition useful as a deposit control agent to control the formation, deposition and adherency of scale imparting compounds in an aqueous system comprising an anionic/cationic polymer mixture of (a) polyacrylic acid having a weight average molecular weight of from about 1-5 thousand, and (b) poly(dimethyldiallylammonium chloride) having a weight average molecular weight of from about 25 thousand to 1 million, wherein the weight ratio of (a) to (b) is from 1:1 to 1:8.

The present invention also relates to a method of inhibiting the precipitation and deposition of scale-forming salts in an aqueous system, comprising the step of adding to said system an amount sufficient to establish a concentration of from 1 to 100 mg/L of an anionic/cationic polymer mixture of (a) polyacrylic acid having a weight average molecular weight of from about 1-5 thousand, and (b) poly(dimethyldiallylammonium chloride) having a weight average molecular weight of from about 25 thousand to 1 million, wherein the weight ratio of (a) to (b) is from 1:1 to 1:8 . In particular, the present invention relates to such a method in which calcium carbonate is the scale-forming salt, the ratio of (a) to (b) is from 1:3 to 1:5, and said polymer mixture is added to the aqueous system being treated in an amount sufficient to establish a concentration of from 10 to 50 mg/L.

## DETAILED DESCRIPTION OF THE INVENTION

The composition of the present invention useful as a deposit control agent to control the formation, deposition and adherency of scale imparting compounds in an aqueous system comprises an anionic/cationic polymer mixture of (a) polyacrylic acid having a weight average molecular weight of from about 1-5 thousand, and (b) poly(dimethyldiallylammonium chloride) having a weight average molecular weight of from about 25 thousand to 1 million, wherein the weight ratio of (a) to (b) is from 1:1 to 1:8.

It is essential that the weight average molecular weight of the polyacrylic acid component of the anionic/cationic polymer mixture be in the range of from about 1 to 5 thousand. It has been found that when the molecular weight exceeds about 5 thousand, that a considerable reduction in scale inhibiting properties ensues. By contrast, the weight average molecular weight of the poly(dimethyldiallylammonium chloride) component of the anionic/cationic polymer mixture of the present invention must be at least about 25 thousand, but may go as high as about 1 million or even higher. With very high molecular weights, however, scale inhibiting properties decline without any offsetting advantage.

The ratio of the anionic and cationic components of the polymer mixture compositions is another critical aspect of the present invention. That ratio is based on overall weight of the polymer components and can range from 1:1 to 1:8, but will preferably be in the range of from 1:3 to 1:5, and is most preferably 1:4. Thus, the cationic component of the polymer mixture, i.e., the poly(dimethyldiallylammonium chloride), will usually be the predominant component by weight.

Ordinarily, it would be expected that the cationic poly(dimethyldiallylammonium choride) would add nothing to the threshold inhibition of scale achieved by using the anionic polyacrylic acid. Indeed, when the cationic poly(dimethyldiallylammonium choride) is combined with various phosphonates, which are threshold inhibitors of scale well known in the art, in amounts equivalent to its use in the compositions and methods of the present invention, essentially no effect is seen, either on the threshold scale inhibiting activity of the phosphonate, or on the type or adherency of any scale which does form. In other words, the scale inhibiting activity of the phosphonates + poly(dimethyldiallylammonium choride) is such that it is as though the polycation were not even present. Thus, it was surprising to discover that when the cationic poly(dimethyldiallylammonium choride) is combined with the anionic polyacrylic acid in the polymer mixture compositions of the present invention, that a significant observable increase in non-adherent scale is achieved.

It was also surprising to discover that when the anionic acrylic acid monomer and the cationic dimethyldiallylammonium choride monomer are polymerized as a copolymer at a weight ratio within the range of the polymer mixtures of the present invention, that no effect on adherency of the scale was achieved, in contrast to the results achieved with the compositions and methods of the present invention. It is theorized that there is an interaction between the polyacrylic acid component of the polymer mixture and the $CaCO_3$ crystallites which constitute the nucleus of each scale particle potentially deposited, such that there is a threshold inhibition of formation of a particle of scale of sufficient size to be deposited; while the poly(dimethyldiallylammonium chloride) component of the polymer mixture neutralizes the charges on the $CaCO_3$ crystallites, thereby flocculating them and preventing them from producing adherent scale deposits.

The anionic and cationic polymer mixtures of the present invention, comprising polyacrylic acid and poly(dimethyldiallylammonium chloride) in the ranges of molecular weights and weight ratios described above, are, in effect, blends of the two homopolymers. The blending is achieved with the use of conventional apparatus well known in the art, and no particular difficulty will be encountered in making the polymer blends which comprise the compositions of the present invention. On rare occasions, insoluble polysalt complexes may be formed, but these can be easily avoided by adjusting the pH so that the polyacrylic acid, normally anionic, is present as the un-ionized acid form.

When any of the anionic and cationic polymer mixture compositions of the present invention are used to inhibit the precipitation, deposition, and adherence of scale-forming salts in an aqueous system, they can be effectively employed for that purpose when added in amounts sufficient to establish a concentration in said aqueous system of from 1 to 100 mg/L. Preferably, the amount added will be sufficient to establish a concentration of from 5 to 75 mg/L, and most preferably, the amount added will be sufficient to establish a concentration of from 10 to 50 mg/L of the compound. It is understood, however, that many factors, of the type which have been explained in detail with regard to the background to the present invention, will determine the actual amount of the anionic and cationic polymer mixture compositions of the present invention which will be added to any particular aqueous system in order to achieve the maximum amount of inhibition of alkaline earth metal, especially calcium carbonate scale formation, deposition and adherence in that aqueous system. The calculation of those amounts will be well within the skill of the artisan in this field.

The phrases "inhibiting the precipitation" and "inhibiting the formation and deposition" are meant to include threshold inhibition, dispersion, solubilization, or particle size reduction. The phrases "inhibiting the adherence" and "increasing the non-adherence", are meant to define the formation of a scale deposit which is easily removed, e.g., by simple rinsing, i.e., a scale deposit which is not so firmly bonded to the surface to which it is attached that it cannot be removed by simple means as opposed to harsh mechanical or chemical treatment.

The phrase "scale-forming salts" is meant to include any of the scale-forming salts, including, but not limited to, calcium carbonate, calcium sulfate, calcium phosphate, calcium phosphonate (including calcium hydroxyethylidene diphosphonic acid), calcium oxalate, calcium fluoride, barium sulfate and magnesium salts.

The phrase "aqueous system" means commercial or industrial systems utilizing water and involving heat exchange surfaces, usually of metal, including cooling water systems including cooling towers, boiler water systems, desalination systems, gas scrubbers, and thermal conditioning equipment.

The manner of addition of any particular anionic and cationic polymer mixture composition of the present invention, to an aqueous system will also be straightforward to a person of ordinary skill in this art. It may be added in liquid blend form by mechanical dispensers of known design. It may also be added in diluted liquid form. The anionic and cationic polymer mixture composition may also be combined with other chemical treatment agents for dispensing to the aqueous system; and these in combination may be dispensed in liquid form.

EXAMPLES OF PREFERRED EMBODIMENTS

The following examples demonstrate specific terpolymer embodiments for use in the scale inhibition method of treatment of the present invention, but are not intended to in any way limit the scope of the present invention.

EXAMPLE 1

Effect of Varying Molecular Weight of Poly(dimethyldiallylammonium chloride) on Inhibition of Scale Deposits

A high pH/high saturation level $CaCO_3$ standard stagnant flask test procedure was used for analysis of filtrate for dissolved calcium. The procedure was then expanded to include determination of non-adherent, i.e., suspended, and adherent scales. The temperature was changed to 50°C to better match conditions attainable in cycling units.

Conditions:

250 mg/L $Ca^{2+}$; 600 mg/L total alkalinity as $HCO_3^-$; pH obtained from natural buffering of an 80% $HCO_3^-$/20% $CO_3^{2-}$ mixture; flasks stored at 55°C for 24 hrs.

Procedures:

(1) add inhibitor at desired concentration to flask; (2) add 10 ml of 0.313 M $CaCl_2 2H_2O$ solution to provide 250 mg/L $Ca^{2+}$; (3) add 10 ml of 33g/L of $NaHCO_3$ to give 480 mg/L $HCO_3^-$ and 10 ml of 10.6 g/L $Na_2CO_3$ to give 120 mg/L $CO_3^{2-}$; (4) record pH of approximately 9 and place stoppered flask in a beaker bath or oven at 55° C; (5) at 24 hrs, remove flask and filter and (6) filtered aliquots are titrated for calcium content by the Schwarzenbach method; calculate percent inhibition.

Procedures for Adherent and Non-Adherent Scale:

in order to determine non-adherent scale, after determination of dissolved calcium as described above, the contents of the flask are emptied into a 400 ml beaker, and the flask is then rinsed and swirled with 15 ml distilled water twice to remove non-adherent or loosely adherent scale. The washings are added to the contents of the 400 ml beaker. This solution is acidified with 5 ml of 1:3 $HCL:H_2O$ solution and stirred for one hour to dissolve scale particles. An aliquot of 10 ml is diluted to 50 ml and titrated, with Ca buffer and indicator, to give the dissolved plus non-adherent scale Ca present in the sample. When the dissolved Ca value is subtracted, the amount of Ca present in the non-adherent scale is obtained.

In order to determine adherent scale, the flask is next filled with 250 ml distilled water, acidified with 5 ml of 1:3 $HCl:H_2O$ solution and stirred for one hour. An aliquot of 10 ml is diluted to 50 ml and titrated for Ca content as done for the previous samples. From this value, the amount of Ca present in the adherent scale is calculated.

Using the procedures described above, the effect of weight average molecular weight of the cationic poly(dimethyldiallylammonium chloride), referred to as polyDMDAAC, component of the polymer mixture comprising the compositions of the present invention was evaluated, and the results obtained are set out in the table of values below.

TABLE 1

| PolyDMDAAC Mol. Wt. ('000's) | Dosage (ppm) | Percent of Total Calcium | | |
|---|---|---|---|---|
| | | Dissolved | Non-Adherent | Adherent |
| low | 12.5 | 48 | 38 | 22 |
| | 25 | 48 | 50 | 11 |
| | 50 | 50 | 48 | 12 |
| | 100 | 51 | 46 | 13 |
| 5 - 8 | 12.5 | 47 | 3 | 50 |
| | 25 | 39 | 40 | 30 |
| | 50 | 44 | 18 | 42 |
| | 100 | 45 | 53 | 10 |
| 40 - 70 | 12.5 | 43 | 46 | 2 |
| | 25 | 37 | 54 | 2 |
| | 50 | 48 | 44 | 2 |
| | 100 | 44 | 48 | 2 |
| 250 - 300 | 12.5 | 48 | 36 | 6 |
| | 25 | 46 | 44 | 1 |
| | 50 | 46 | 43 | 1 |
| | 100 | 44 | 44 | 2 |
| 750 | 12.5 | 50 | 40 | 2 |
| | 25 | 48 | 39 | 2 |
| | 50 | 45 | 44 | 2 |
| | 100 | 46 | 42 | 2 |

EXAMPLE 2

Comparison of Copolymer and Polymer Mixture

Using the procedures described above for Example 1, a comparison was made between a copolymer of acrylic acid (AA) and dimethyldiallylammonium chloride (DMDAAC) in which the weight ratio is 1:4, respectively, and a polymer mixture of the present invention comprising polyacrylic acid and poly(dimethyldiallylammonium chloride) in the same 1:4 weight ratio. The results obtained are set out in the table of values below.

TABLE 2

| Inhibitor | Ratio | Dosage (ppm) | Percent of Total Calcium | | |
|---|---|---|---|---|---|
| | | | Dissolved | Non-Adherent | Adherent |
| AA/DMDAAC Copolymer | 1/4 | 12.5 | 31 | 51 | 17 |
| | | 25 | 28 | 17 | 52 |
| | | 50 | -- | -- | 45 |
| | | 100 | 48 | 2 | 46 |
| AA/DMDAAC Polymer Mixture | 1/4 | 12.5 | 55 | 35 | 3 |
| | | 25 | 58 | 32 | 2 |
| | | 50 | 62 | 30 | -- |
| | | 100 | 64 | 18 | 7 |

7

EXAMPLE 3

Effect of Varying Weight Ratios of Anionic and Cationic Components on Inhibition of Scale Deposits

Using the procedures described above in Example 1, a comparison was made between various weight ratios of the acrylic acid (AA) and dimethyldiallylammonium chloride (DMDAAC) components of the polymer mixture compositions of the present invention. The results obtained are set out in the table of values below.

TABLE 3

| | | | Percent of Total Calcium | | |
|---|---|---|---|---|---|
| Inhibitor | Ratio | Dosage (ppm) | Dissolved | Non-Adherent | Adherent |
| AA/DMDAAC | 1/9 | 12.5 | 52.8 | 33.3 | 8.6 |
| Polymer | | 25 | 48.6 | 18.9 | 24.3 |
| Mixture | | 50 | 60.5 | 0 | 30.4 |
| | | 100 | 55.7 | 0 | 39.0 |
| | 1/4 | 5 | 46.6 | 47.0 | 7.2 |
| | | 10 | 52.3 | 42.6 | 2.6 |
| | | 25 | 64.2 | 31.4 | 2.6 |
| | | 50 | 65.6 | 27.7 | 1.9 |
| | | 100 | 66.9 | 20.2 | 1.8 |
| | 2/3 | 5 | 61.4 | 10.6 | 24.0 |
| | | 10 | 61 | 31 | 6.2 |
| | | 25 | 70.2 | 19.0 | 4.8 |
| | | 50 | 68.8 | 15.2 | 13.8 |
| | | 100 | 70.7 | 4.6 | 20.8 |

**Claims**

1. A composition useful as a deposit control agent to control the formation, deposition and adherency of scale imparting compounds in an aqueous system comprising an anionic/cationic polymer mixture of (a) polyacrylic acid having a weight average molecular weight of from about 1-5 thousand, and (b) poly(dimethyldiallylammonium chloride) having a weight average molecular weight of from about 25 thousand to 1 million, wherein the weight ratio of (a) to (b) is from 1:1 to 1:8.

2. A composition according to Claim 1 wherein the weight average molecular weight of the poly(dimethyldiallylammonium chloride) is in the range of from about 40 to 70 thousand.

3. A composition according to Claim 1 wherein the weight ratio of (a) to (b) is from 1:3 to 1:5.

4. A composition according to Claim 1 wherein the weight ratio of (a) to (b) is 1:4.

5. A method of inhibiting the formation, deposition and adherency of scale-forming salts in an aqueous system, comprising the step of adding to said system an amount sufficient to establish a concentration of from 1 to 100 mg/L of an anionic/cationic polymer mixture of (a) polyacrylic acid having a weight average molecular weight of from about 1-5 thousand, and (b) poly(dimethyldiallylammonium chloride) having a weight average molecular weight of from about 25 thousand to 1 million, wherein the weight ratio of (a) to (b) is from 1:1 to 1:8.

6. A method according to Claim 5 wherein the weight average molecular weight of the poly(dimethyldiallylammonium chloride) is in the range of from about 40 to 70 thousand.

7. A method according to Claim 5 wherein the weight ratio of (a) to (b) is from 1:3 to 1:5.

8. A method according to Claim 5 wherein the weight ratio of (a) to (b) is 1:4.

9. A method according to Claim 5 wherein calcium carbonate is the scale-forming salt and said polymer mixture is added to the aqueous system being treated in an amount sufficient to establish a concentration of from 10 to 50 mg/L.

10. A method according to Claim 9 wherein the aqueous system being treated is a cooling tower.

**European Patent Office**

# EUROPEAN SEARCH REPORT

Application Number

EP    92 30 4675

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 205 143 (R.M.GOODMAN)<br>* column 2, line 22 - line 64 *<br>* column 4, line 5 - line 18 *<br>--- | 1-9 | C02F5/10<br>C02F5/14<br>C02F5/12 |
| A | US-A-3 832 302 (R.W.LANSFORD)<br>* claim 1; example 1 *<br>--- | 1,5 | |
| A | FR-A-1 560 784 (W.R.GRACE & CO.)<br>* the whole document *<br>----- | 1,5 | |
| | | | **TECHNICAL FIELDS SEARCHED (Int. Cl.5)**<br><br>C02F |

The present search report has been drawn up for all claims

| Place of search | Date of completion of the search | Examiner |
|---|---|---|
| THE HAGUE | 04 AUGUST 1992 | GONZALEZ ARIAS,M.L. |

EPO FORM 1503 03.82 (P0401)